# EUROPEAN PATENT APPLICATION

(11) **EP 0 654 457 A1**
(43) Date of publication of application: **24.05.1995**
(21) Application number: 94120470.3
(22) Date of filing: 26.06.1990
(51) Int. Cl.: C05F 3/00

(54) **Method for manufacturing organic fertilizers**

(62) Divisional of application: 90909394.0
(71) Applicant: INOUE, Satoshi, Naka-gun, Kanagawa 255 (JP)
(72) Inventor: INOUE, Satoshi, Naka-gun, Kanagawa 255 (JP)
(74) Representative: DIEHL GLAESER HILTL & PARTNER

(57) **Abstract**

There is provided a method for manufacturing organic fertilizers by kneading and cutting a mixture of livestock excrements with cellulose-containing organic materials, followed by pulverizing the treated mixture while contacting it with air. The method is characterized in that said mixture is adjusted to a moisture content of 25 to 75 weight % before kneading and cutting, that said kneading and cutting is carried out until the temperature of the mixture rises up to 40 to 90°C, and that there is added a pH adjusting agent by which the pH value during the fermentation of microorganisms is in the range of 6 to 9 for activating and propagating thermophilic microoganisms and aerobic microorganisms as well as for decreasing psychrophilic microorganisms and anaerobic microorganisms. The method leads to composts of good quality and without a bad odor within a short time.

## Description

The present invention relates to a method for manufacturing organic fertilizers by artificial treatments of livestock excrements, such as chicken or cattle manures, with cellulose-containing organic materials such as grasses, hulls, straws, wood chips, etc. into organic fertilizers within a short time.

An enormous quantity of excrements exhausted from the large-scale livestock industry are left as such due to lack of appropriate treating methods, and environmental pollution caused by bad odor and discharge thereof without treatment have created a social problem.

In general, it requires 5 to 6 months to compost excrements of chicken, cattle, swine, etc., and cellulose-containing coarse organic materials used as beds thereof, such as grasses, straws, hulls, wood chips, etc., by leaving them as such in the nature. This is very inefficient and generates bad odor during that period. It has also been difficult to obtain evenly-fermented compost of good quality because of unevenness in fermentation between the surface and interior parts.

From WO-80/01803 there was known a process for the production of nutrient material wherein animal manure is mixed with paper shreds or cellulose fibres, followed by mincing and cutting the mixture, whereby it is heated by friction. Thereafter the mixture is comminuted. There is no teaching in this document that the moisture content of said mixture is of any importance and must be controlled.

In EP-A-0286758 there is described a screw mill which is used, for example, for producing calcium carbonate powder as a bulking agent for paper. The mill is provided with a cylindrical member wherein a screw is rotating. The material filled into the cylinder is pressed and passed forward by the screw within the cylinder at the end of which said material is ground into a fine powder between multi-stage vanes. The document does not mention the use of a second cylinder which might be provided for a specific purpose.

EP-A-0279076 discloses a device for mincing organic waste material, provided with at least two screws within one chamber. One of these screws has at least one mincing tool.

The object of the present invention is a method for manufacturing composts of good quality within a short time.

This above object is met by a method for manufacturing organic fertilizers by kneading and cutting a mixture of livestock excrements with cellulose-containing organic materials under an elevated pressure, wherein the temperature of said mixture rises by the elevated pressure and by friction, followed by pulverizing the thus treated mixture while contacting it with air, characterized in that said mixture of livestock excrements with cellulose-containing organic materials is adjusted to a moisture content of 25 to 75 weight % before kneading and cutting the mixture, that said kneading and cutting is carried out until the temperature of the mixture treated rises up to 40 to 90°C, and that there is added a pH adjusting agent to the mixture consisting of livestock excrements and cellulose-containing materials, simultaneously with the adjusting of the moisture content of said mixture, by which pH adjusting agent the pH value during the fermentation of microorganisms is in the range of 6 to 9 for activating and propagating thermophilic microorganisms and aerobic microorganisms as well as for decreasing psychrophilic microorganisms and anaerobic microorganisms.

In the above method, it is preferred that by the pH adjusting agent, the pH value during the fermentation of microorganisms is in the range of 7 to 8.

For an accelerated fermentation and a better result the pH value of the mixture is adjusted with a pH adjusting agent to a pH value during the fermentation process in the range of pH 6 to 9, as well as the moisture content of the mixture of livestock excrements and cellulose-containing organic materials, such as grasses, straws, hulls, wood chips, etc., is adjusted to 25 to 75%. This pH-adjusted mixture is cut and kneaded under an elevated pressure, and the temperature thereof is increased to 40 to 90 °C by compression and friction caused by kneading. Then the treated mixture is released from the compressed state and exposed to air. The moisture adjustment is successfully performed by the addition of a previously prepared dry fertilizer according to the present invention.

The method according to the present invention can be accomplished by using a device as described in European patent application No. 90909394.0-2111 related with the present divisional case. Said device is a device for manufacturing organic fertilizers with a cylindrical treatment tank which is equipped with a hopper for feeding of raw materials on the rear end, with a screw conveying system and a kneading/cutting system inside, and with an opening, wherein said cylindrical treatment tank is provided as a primary treatment tank with a primary screw and a secondary screw the latter being disposed close to an open/close gate of the primary treatment tank and rotating in a direction reverse to that of the primary screw, with the kneading/cutting system being provided between the primary screw and the secondary screw and consisting of multiple rotary blades provided on a rotary shaft and of multiple fixed blades projecting to the inside of the primary treatment tank and being close to or almost touching the corresponding rotary blades, with the open/close gate connected to said opening, and that there is further provided a secondary treatment tank which is equipped with an entrance connected to said open/close gate, with an opening for taking out products, and with rotary blades for fine cutting inside.

The screw conveying system is preferably composed of a main compressing screw which conveys raw materials toward the open/close gate, and with an auxiliary compressing screw for conveying the raw materials into the reverse direction.

The cutting/kneading system can be composed of rotary blades on a rotary shaft and of fixed blades projecting to the inside of the primary treatment tank corresponding to the rotary blades. The projection length of the fixed blades is preferably adjustable.

In the method of the present invention, the temperature of raw materials is elevated to 40 to 90 °C by means of mechanical compression and kneading. Accordingly, microorganisms are activated by physical and thermal stimulations, and the cellulose-containing organic materials are crushed into small fragments by the compression and kneading. Therefore, livestock excrements, which are main nutrients for microorganisms, are evenly distributed. Thus, the microorganisms are activated under suitable conditions for their growth, such as temperature, moisture, etc.. Therefore, all microorganisms start their activities simultaneously, and ferment the raw materials within a short time. In such a case, thermophilic microorganisms propagate quickly in the primary treatment tank and the number of the psychrophilic microorganisms decreases relatively. In the secondary treatment tank the aerobic microorganisms propagate abruptly since the treated material has been released from the compressed state and pulverized. Accordingly, the number of the anaerobic microorganisms decrease relatively.

Thus, the thermophilic microorganisms and the aerobic microorganisms, which are useful for fermentation, are activated and propagate quickly, and since the number of the psychrophilic microorganisms and of the anaerobic microorganisms which cause a bad odor decrease, composts of good quality and without a bad odor can be manufactured within a short time.

The range of the pH value for important microorganisms for the fermentation, such as cellulose-decomposing microorganisms, is 6 to 9, and the optimum pH value is 7 to 8. The value of pH of the raw materials can be too low due to the production of organic acids during the fermentation, and the pH value can be too high due to the presence of excess ammonia, and both cause a delay in the fermentation. This problem is resolved by adjusting the pH by the addition of a pH adjusting agent so that the pH value during fermentation will be within a range of pH 6 to 9. Besides, fertilizing ability of the products can be improved by the use of a pH adjusting agent which is a fertilizer as well.

With the above device the temperature of the materials in the primary treatment tank goes up due to the compression caused by the screw conveyor and by the cutting and kneading. The materials are abruptly released from an elevated pressure to a decreased pressure in the secondary treatment tank, and then pulverized with aeration in said tank. Thus, the raw materials can be treated and taken out as a compost after a single treatment by a series of devices.

An example of the present invention is explained with the attached drawings below.

Fig. 1 is a plane view of the device for manufacturing organic fertilizer of the present invention.

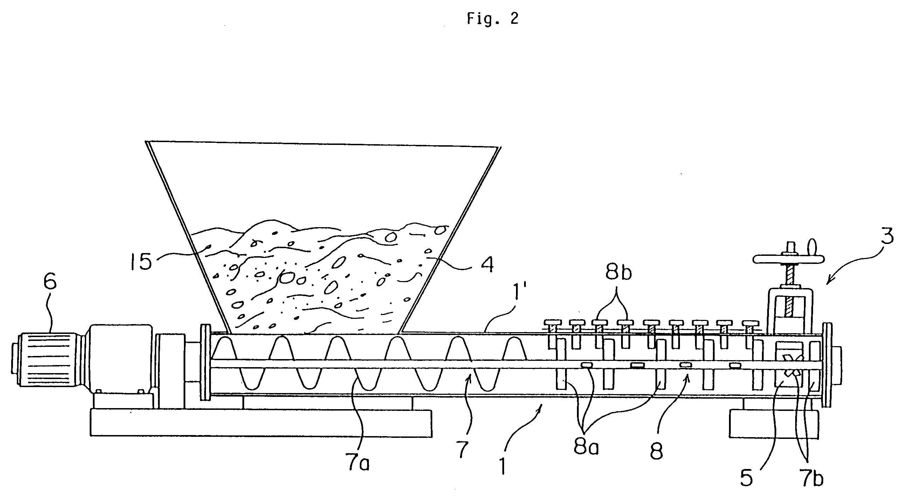

Fig. 2 is a cross section along the line II - II of Fig. 1.

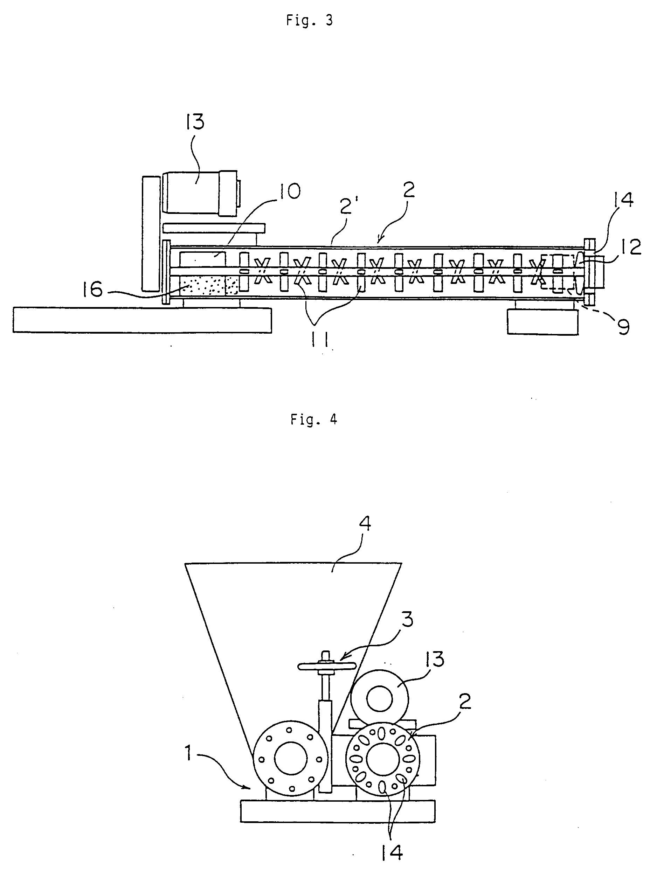

Fig. 3 is a cross section along the line III - III of Fig. 1.

Fig. 4 is a right-side elevation view of Fig. 1.

Fig. 5 is a temperature-time graph of the materials under treatment.

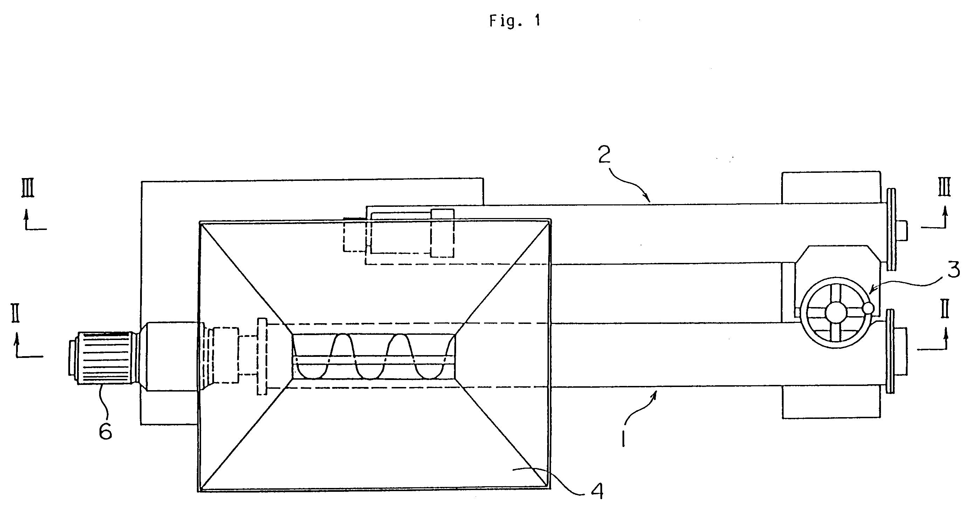

As shown in Fig. 1, the device for manufacturing organic fertilizers consists of a cylindrical primary treatment tank 1, and a cylindrical secondary treatment tank 2, both connected through an open/close gate 3.

The primary treatment tank 1 is equipped with a cylinder 1' a hopper 4 for the input of raw materials on the one end and with an opening 5 connected to an open/close gate 3 at the other end. Within the cylinder 1', a screw conveyor 7 driven by a motor or a similar system and a cutting/kneading system 8 are also provided.

Although the screw conveyor 7 transports under compression the raw materials fed to the hopper 4 toward the open/close gate 3, it is equipped with a secondary screw 7b which rotates to the reverse direction compared with that of the primary screw 7a. A part of the primary screw 7a is located just below the hopper. The secondary screw is disposed close to the opening 5 of the primary treatment tank and faces the primary screw 7a, so that it further compresses the raw materials having been transported and compressed by the primary screw 7a.

The cutting/kneading system 8 is disposed next to the primary screw 7a, in other words, between the primary screw 7a and the secondary screw 7b.

The cutting/kneading system 8 consists of a number of blades 8a which are rotated by a driving system such as a motor, and of fixed blades 8b projecting into the primary treatment tank, corresponding to the rotary blades 8a.

The fixed blades 8b promote the shearing of raw materials by grinding them with the rotary blades 8a and prevent the co-rotating of the raw materials with the rotary blades 8a, and also act as baffle boards for the compressed transportation of the raw materials. The fixed blades therefore are preferably equipped in the primary treatment tank with a screw-driving system or similar means, and the fixed blades 8b can be driven forward and backward, which allows to control the temperature, caused by compression and friction, by adjusting the height of the fixed blades 8b.

The secondary treatment tank 2 consists of a cylindrical tank 2' which has an entrance 9, connected to the aforesaid open/close gate 3, on the one end, and an opening 10 for taking out of products 16, on the other end. Within the cylinder 2' there are provided rotary pulverizing blades 11 which drive the treated materials toward the output opening 10 while pulverizing them. A ventilator 12 for taking air into the cylinder is provided on the side of the entrance 9.

In the drawings showing an example, both the rotary pulverizing blades 11 and the ventilator 12 are on the same rotary shaft driven by a motor 13, and reference numeral 14 is an opening for air intake for the ventilator 12.

The method of the present invention to manufacture composts using the device shown by the drawings is described below.

First of all, livestock excrements, such as chicken feces, cattle/horse feces, etc. and cellulose-containing organic materials, such as grasses, straws, hulls, and wood chips (preferably those having used as livestock beds) are taken as raw materials 15. The moisture content thereof is adjusted to 25% to 75%, and the moisture-adjusted raw materials 15 are fed to the primary treatment tank 1 through the hopper 4.

The raw materials 15 are transported by the primary screw 7a of the compressing transportation system 7, and finely crushed by the cutting/kneading system 8 on the way, where the cutting/kneading system, particularly the fixed blades 8b thereof act as baffle boards.

The raw materials transported by the primary screw 7a, are cut and kneaded while being compressed. Therefore the temperature is increased quickly due to the heat of compression and the heat of friction. Optionally, the intensity of the kneading friction, the quantity of raw materials to be transported, etc., can be adjusted by adjusting the projection length of the fixed blades 8b. The temperature is further increased by elevating the pressure by using the secondary screw 7b.

Thus, the temperature of the raw materials 15 in the primary treatment tank 1 is elevated by compression and kneading, and mechanical and thermal stimulations activate the microorganisms. Therefore the fermentation is performed homogeneously and accelerated. Thermophilic microorganisms propagate because of the elevated temperature, and the psychrophilic microorganisms decrease in their number. As a result, a bad odor is suppressed.

The adjustment of the open/close gate 3 regulates the discharge of the treated materials whereby internal pressure and temperature are adjusted. Thus, the materials treated in the primary treatment tank by means of compression and kneading are heated to 40 to 90°C and then discharged through the open/close gate 3.

The high temperature materials discharged through the open/close gate 3 are transported into the secondary treatment tank 2. The treated materials are pulverized by high-speed rotary blades in the secondary treatment tank 2 while being contacted with air and thus evenly exposed to oxygen. As a result, aerobic microorganisms are activated, grow rapidly and accelerate the fermentation, by which bad odor is further suppressed because of the decrease of the number of anaerobic microorganisms.

Thus, the treated materials having been pulverized under aeration are discharged as an organic fertilizer 16 through the output opening 10. As is already stated, the main microorganisms for fermentation, such as cellulose-decomposing microorganisms, have their suitable pH range for growing in the range of pH 6 to 9, and their optimum pH for growing is pH 7 to 8.

The value of pH in the raw materials tends to be decreased by organic acids produced during the process of fermentation, and these acids cause a delay in the fermentation. A similar delay in fermentation is caused in case of a higher pH value due to the presence of an excess quantity of ammonia in the raw materials. For the purpose of accelerating the fermentation by means of adjusting the pH, and also of improving the fertilizing ability of the final products, the pH is adjusted beforehand, so that the pH during the fermentation will remain within a range of pH 6 to 9, by the addition of a pH adjusting agent. This agent contains calcium and can be used as a fertilizer in form of e. g. calcium silicate, calcium cyanamide, calcium oxide, calcium hydroxide, calcium carbonate, magnesia calcium oxide, magnesia calcium hydroxide, etc. in case of pH decreasing tendency, or as a phosphate fertilizer in form of e. g. superphosphate, concentrated superphosphate, etc. when the pH becomes too high, at the time of moisture adjustment or thereafter.

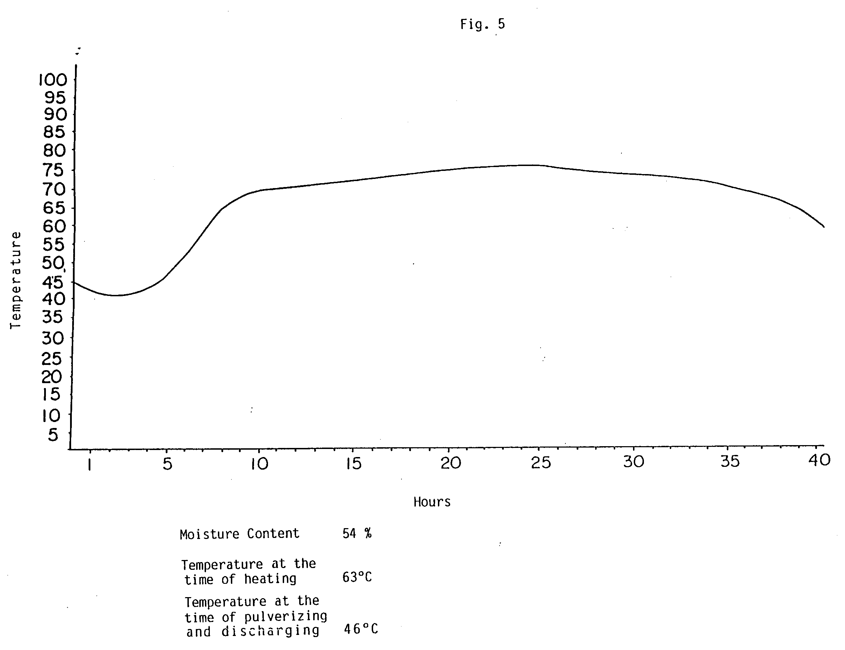

Fig. 5 shows a temperature-time graph of treated materials from the start to the end of fermentation when treated by the method of the present invention.

By the method of the present invention, as stated above, the temperature of the raw materials is suddenly elevated by mechanical compression, cutting and kneading, then the materials are released suddenly into a low pressure atmosphere, and are evenly exposed to oxygen by the contact with air while being pulverized. Therefore, microorganisms in the treated materials are activated because of physical and thermal stimulations, by which the fermentation is highly enhanced. Because of these reasons, composting is accomplished within only several days, otherwise it takes 5 to 6 months by conventional methods, and homogeneous fertilizers of good quality are obtained.

Because of the short treating time, no bad odor and waste water are generated since the number of mesophilic and anaerobic microorganisms is remarkably decreased, and because of the in-situ treatment of excrements, the present invention contributes very much to the prevention of pollution and the improvement of the environment.

Furthermore, the resultant composts give better results against root eelworm. The growth of soil microorganisms was also observed to be better than that obtained by the applications of composts produced by conventional processes, which had been prepared spending several months of time.

These facts show that the fertilizers prepared by the process of the present invention are less decomposed and contain more nutrients for soils, which enhance propagation of soil microorganisms. As a result thereof, parasitic microorganisms are suppressed and the number of harmful worms is decreased. The process of the present invention is very useful because the products obtained thereby accomplish the primary purpose of organic fertilizers.

## Claims

1. Method for manufacturing of organic fertilizers by kneading and cutting a mixture of livestock excrements with cellulose-containing organic materials under an elevated pressure, wherein the temperature of said mixture rises by the elevated pressure and by friction, followed by pulverizing the thus treated mixture while contacting it with air, characterized in that said mixture of livestock excrements with cellulose-containing organic materials is adjusted to a moisture content of 25 to 75 weight % before kneading and cutting the mixture, that said kneading and cutting is carried out until the temperature of the mixture treated rises up to 40 to 90°C, and that there is added a pH adjusting agent to the mixture consisting of livestock excrements and cellulose-containing materials, simultaneously with the adjusting of the moisture content of said mixture, by which pH adjusting agent the pH value during the fermentation of microorganisms is in the range of 6 to 9 for activating and propagating thermophilic microoganisms and aerobic microorganisms as well as for decreasing psychrophilic microorganisms and anaerobic microorganisms.

2. Method according to claim 1, characterized in that by the pH adjusting agent the pH value during the fermentation of microorganisms is in the range of 7 to 8.
